# FASCICULE DE BREVET EUROPEEN

(11) **EP 1 030 820 B1**
(45) Date de publication et mention de la délivrance du brevet: **11.09.2002**
(21) Numéro de dépôt: 98932207.8
(22) Date de dépôt: 15.06.1998
(51) Int. Cl.: C02F 3/00, C02F 3/30

(54) **PROCEDE DE REGULATION AUTOMATIQUE DE L'AERATION D'UNE INSTALLATION DE TRAITEMENT BIOLOGIQUE D'EAUX USEES**
VERFAHREN ZUR AUTOMATISCHEN REGULIERUNG DER BELÜFTUNG EINER BIOLOGISCHEN ABWASSERREINIGUNGSANLAGE
METHOD FOR AUTOMATICALLY ADJUSTING THE AERATION OF AN INSTALLATION FOR BIOLOGICAL TREATMENT OF WASTE WATER

(30) Priorité: 30.06.1997 FR 9708212
(43) Date de publication de la demande: 30.08.2000
(73) Titulaire: Suez- Lyonnaise des Eaux, 92753 Nanterre (FR)
(72) Inventeur: AUDIC, Jean-Marc, F-78700 Conflans Sainte Honorine (FR); CAULET, Philippe, F-78870 Bailly (FR); LEFEVRE, Fanny, F-78300 Poissy (FR)
(74) Mandataire: Armengaud Ainé, Alain
(86) Numéro de dépôt international: FR9801252
(87) Numéro de publication internationale: WO99001384

(56) Documents cités:
- EP-A- 0 396 057
- EP-A- 0 703 194
- WO-A-95/35263
- US-A- 5 304 308

## Description

L'invention concerne un procédé de régulation automatique de l'aération d'une installation de traitement biologique d'eaux usées en vue de l'élimination des pollutions carbonées et azotées.

On sait que l'assainissement des eaux usées constitue un problème majeur. C'est ainsi que l'Union Européenne a été amenée à émettre une directive (n°91/271/CEE) relative au traitement des eaux usées urbaines qui détermine les limites des rejets, dans le milieu naturel, d'eaux usées non traitées. Ainsi, chaque unité de traitement se voit affecter un objectif précis en ce qui concerne la qualité du traitement des eaux, le fait de ne pas atteindre un tel objectif pouvant donner lieu à des pénalités d'ordre financier ou même pénal.

La plupart des installations de traitement d'eaux usées urbaines mettent en oeuvre le procédé à boues activées. Une phase importante de ce procédé réside dans l'élimination du carbone et de l'azote contenus dans les eaux usées, par séquençage des périodes d'aération. On sait en effet, que le problème principal que l'on rencontre dans les installations de traitement d'eaux usées est d'adapter le traitement aux variations du débit d'entrée de l'eau à épurer et à sa charge polluante, afin d'obtenir une qualité constante de l'eau épurée et la quantité minimale réglementaire de rejets polluants dans le milieu naturel. Dans ce but, l'élimination du carbone et de l'azote exige un contrôle très strict et précis de l'aération étant donné que cette élimination doit répondre à deux exigences. Selon la première, on doit assurer une durée d'aération totale suffisante par jour afin de réaliser l'oxydation des composants carbonés des eaux usées et la stabilisation des boues ; la seconde est liée plus directement à la répartition journalière des phases d'aération pour mener à bien l'élimination de l'azote. D'une part, il est nécessaire de respecter une durée suffisante d'un maintien en condition aérobie pour que la boue effectue la nitrification et d'autre part, la dénitrification exige un temps de séjour approprié de l'effluent en condition anoxique. Dans ce but, dans les procédés à boues activées à faible charge mis en oeuvre dans un bassin d'aération unique, l'élimination des composés azotés résulte d'un strict contrôle de l'alternance des séquences aérées et non aérées.

Tout défaut de réglage ou de fonctionnement des dispositifs d'apport d'oxygène se traduit par un dysfonctionnement des stations d'épuration d'eaux résiduaires, avec des répercussions sur la qualité de l'effluent traité, l'équilibre de la biomasse épuratoire et les caractéristiques des boues produites.

Une non adaptation des séquences de l'aération a donc des effets à court terme sur la qualité de l'eau obtenue qui peut contenir alors des composés azotés non oxydés si les périodes d'aération ne sont pas suffisamment longues, ou des nitrates si les périodes d'anoxie sont trop courtes. A l'opposé, lorsque les périodes de non aération sont trop longues, l'effluent à traiter rencontre des conditions anaérobies qui doivent être absolument évitées. En effet, les phénomènes d'anaérobie dans le bassin de traitement, liés à une sous-oxydation de certaines zones entraînent à long terme l'apparition de bactéries filamenteuses et ces micro-organismes induisent une modification de la structure du floc et une diminution de son aptitude à la décantation, ce qui a bien entendu une répercussion défavorable sur la qualité et le coût du traitement. Une autre conséquence d'une durée cumulée d'aération insuffisante concerne la qualité de la boue et, en particulier, conditionne sa stabilité.

On comprend que la régulation de l'aération est l'un des points clés d'un tel procédé de traitement des eaux. Divers procédés de régulation ont été mis en oeuvre.

Ainsi, on a utilisé des capteurs mesurant l'oxygène dissous ou le potentiel d'oxydoréduction ainsi que divers capteurs servant à détecter des valeurs de référence, un seuil haut permettant d'arrêter l'aération et un seuil bas de remettre en action le système d'aération, des moyens de temporisation étant utilisés lorsque les seuils ne sont pas atteints. Ces systèmes connus ne donnent pas entière satisfaction. En effet, pour optimiser les réactions de nitrification et de dénitrification, il est essentiel d'apporter l'oxygène quand il le faut et en quantité suffisante, et non simplement d'apporter de l'oxygène comme le font les systèmes décrits ci-dessus.

Afin d'améliorer ces systèmes on a été amené à mesurer en continu le potentiel d'oxydoréduction EH du milieu et à analyser l'allure de la courbe d'évolution de ce potentiel en fonction du temps. Selon ce procédé connu, on calcule la dérivée de cette fonction EH = f(temps). Si cette dérivée est négative, cela correspond à une diminution du potentiel d'oxydoréduction en phase d'anoxie et lorsque la dérivée est nulle, on se trouve dans une phase de stabilisation. Le système calcule alors la durée d'aération ou de non-aération à prévoir, laquelle est égale à la durée d'aération ou de non-aération nécessaire pour amener le potentiel d'oxydoréduction à la valeur requise pour effectuer soit l'élimination du carbone, soit la nitrification, soit la dénitrification, plus le temps complémentaire nécessaire pour effectuer la réaction. Un tel système présente des inconvénients car la courbe du potentiel d'oxydoréduction peut prendre une allure asymptotique (dérivée tendant vers O) et, pour certaines valeurs de potentiel d'oxydoréduction, il faut absolument éviter le passage à une phase de quasi-stabilisation car les conditions sont alors inappropriées au traitement recherché (mauvaise préservation de la biomasse).

La présente titulaire a été amenée à perfectionner ce dernier procédé. Ainsi, son brevet FR-A-2 724 646 décrit un système de régulation de l'aération d'un traitement biologique d'eaux usées mettant en oeuvre un traitement par boues activées appliqué à une élimination combinée du carbone et de l'azote dans une installation à bassin unique muni de moyens d'aération. Un tel système reconnaît, en temps réel, le niveau de traitement requis dans le bassin et il commande la séquence d'aération appropriée. Par ailleurs, il apporte une assistance de diagnostic en ce qui concerne les limites éventuelles du processus. Ainsi, l'aération est mieux adaptée aux conditions du procédé et on améliore la fiabilité et la gestion énergétique et économique de l'aération. On peut ainsi obtenir une élimination complète du carbone et de l'azote tout en maintenant un état d'oxydation suffisant de la boue.

Cependant, ce système de régulation a des limites. S'il convient parfaitement à des procédés d'assainissement à boues activées du type faible charge, à bassin d'aération unique et homogène, il ne peut pas être mis en oeuvre sur des sites de traitement dont la configuration conduit à différencier plusieurs volumes ou bassins d'aération distincts, placés en série. Les figues 1a et 1b des dessins annexés représentent de façon très schématique deux exemples de telles installations de traitement. Les cellules des bassins d'aération étant physiquement séparées, les états d'oxydation et l'avancement des réactions biologiques dans les bassins ne sont plus uniformes dans tout le volume d'aération. Une alternance des séquences aérées et non aérées est encore nécessaire pour réaliser les réactions. Le procédé connu, décrit ci-dessus en dernier lieu, n'est pas directement applicable à des configurations de bassins d'aération en série, non homogènes, la représentativité des mesures du potentiel d'oxydoréduction ne pouvant pas être garantie pour tout le volume d'aération de telles configurations de bassins. En outre, une teneur résiduelle minimale en carbone est nécessaire afin de maintenir à un niveau élevé la cinétique de la dénitrification. En cas de maintien de séquences d'aération identiques pour toutes les cellules d'aération, l'hétérogénéité de la vitesse d'avancement des réactions ne permet pas de mener à bien et d'optimiser les réactions biologiques. II est donc nécessaire de gérer, indépendamment et complémentairement l'aération des différents bassins. C'est là le problème technique qui est résolu par la présente invention.

La présente invention a donc pour objet un procédé de régulation de l'aération d'une installation de traitement biologique d'eaux usées, en vue de l'élimination des pollutions carbonées et azotées, comportant plusieurs bassins d'aération disposés en série, ce procédé étant caractérisé par les étapes suivantes :
- on mesure le potentiel d'oxydoréduction EH, séparément sur chacun des bassins ;
- on transmet respectivement lesdites mesures à un système de traitement de données, en vue de l'analyse de l'évolution du potentiel d'oxydoréduction et de l'établissement des capacités ( diagnostics) du couple aération/biologie à assurer les réactions de dégradation des pollutions carbonées et azotées,
- on détermine, à partir desdits diagnostics, la mise en marche, la poursuite ou l'arrêt de l'aération sur lesdits bassins, en fonction du degré d'épuration recherché de manière que :
   - dans les premiers bassins, ou bassins amont, la priorité soit donnée au traitement de la pollution carbonée avec un paramétrage spécifique des valeurs-seuils du potentiel d'oxydoréduction
   - dans les derniers bassins, ou bassins aval, on affine le traitement de la pollution carbonée et azotée par une gestion de l'aération conforme au procédé décrit dans FR-A-2 724 646.

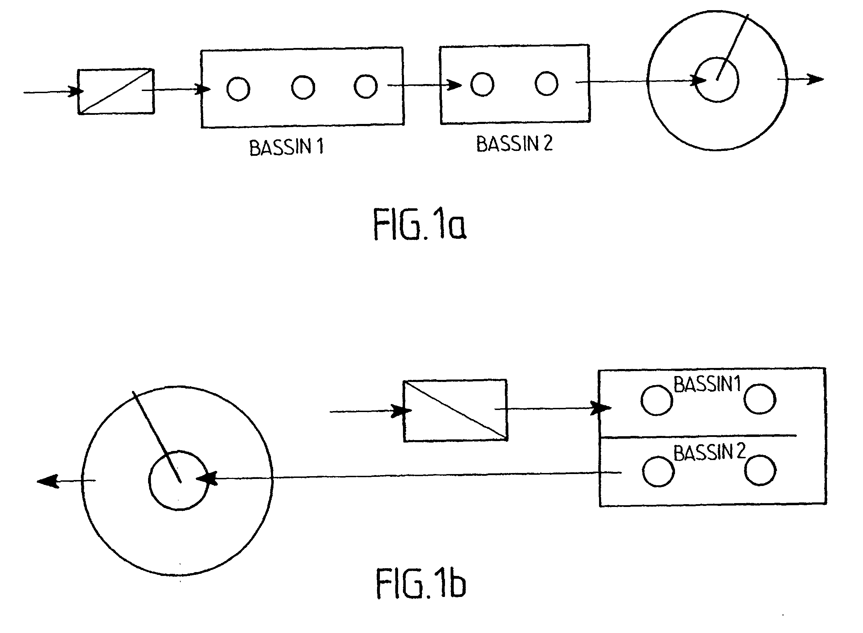

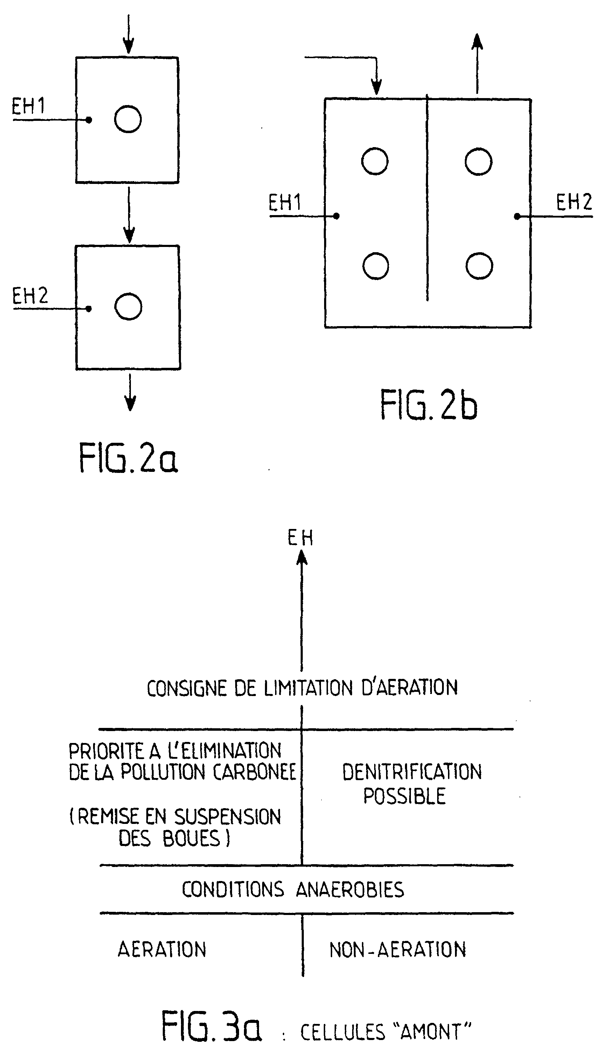

Comme on le comprend, le problème technique résolu par la présente invention consiste à assurer une régulation indépendante, mais complémentaire dans les différentes cellules d'aération de l'installation. Des détecteurs de potentiel d'oxydoréduction sont donc positionnés sur chaque fraction distincte du volume d'aération. Les figures 2a et 2b des dessins annexés représentent de façon très schématique des configurations de bassins multiples en série : bassins séparés (Figure 2a) et bassin en U (figure 2b). Dans le cas du bassin en U, on prévoit deux systèmes de contrôle d'aération distincts pour assurer la régulation sur chacune des cellules d'aération délimitées dans ce cas particulier. On effectue une régulation séparée de l'aération sur les cellules amont et aval. Selon l'invention, on limite volontairement l'avancement des réactions de nitrification sur les cellules amont, en limitant la longueur des séquences d'aération, la priorité étant donnée à l'élimination de la majorité du carbone avec l'existence d'une fuite suffisante des composés carbonés résiduels vers les cellules aval pour y favoriser la dénitrification. Ainsi, les cellules aval assurent l'élimination complète de la pollution azotée et terminent l'élimination du carbone restant. Selon l'invention, on assure une complémentarité des traitements amont et aval, avec une finition du traitement en aval et un amortissement des variations de charges par les cellules amont.

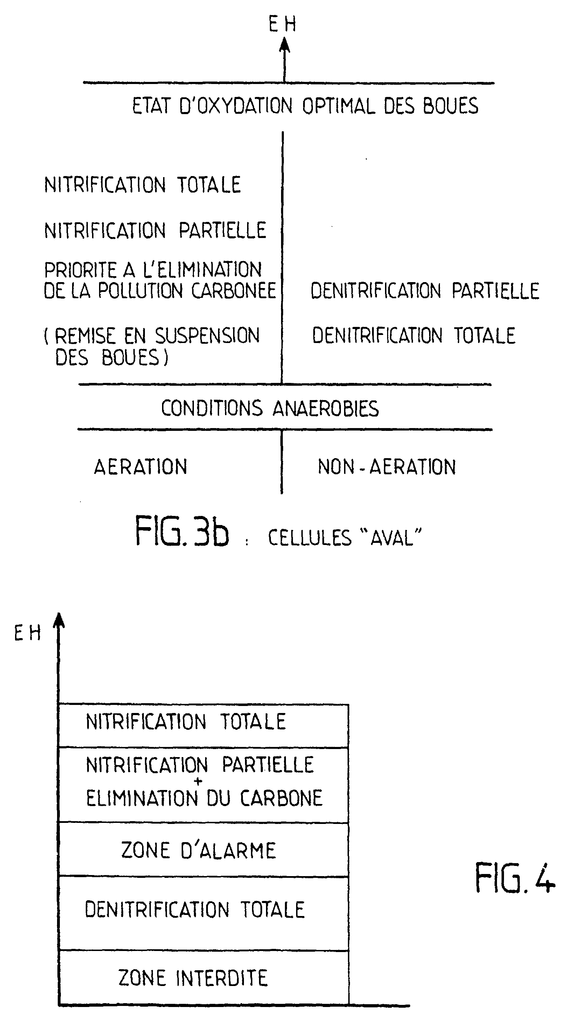

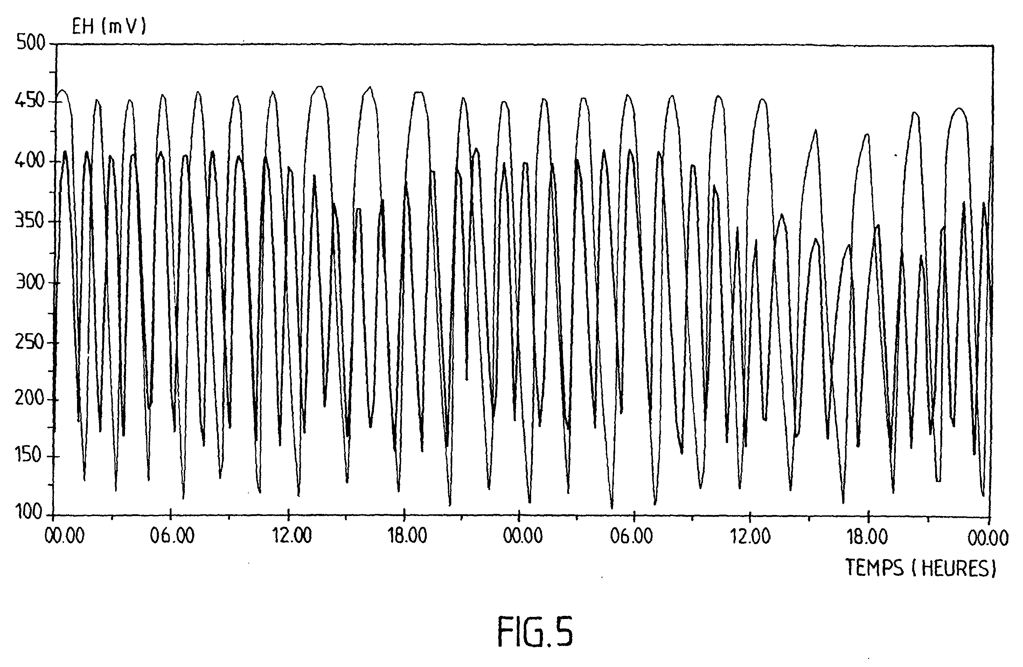

Les figures 3a et 3b illustrent respectivement les relations entre les potentiels d'oxydoréduction et les objectifs des réactions biologiques mises en oeuvre respectivement sur les cellules amont et aval.

Selon le procédé de l'invention, les cellules amonts sont gérées par une logique adaptée donnant la priorité à l'élimination de la pollution carbonée avec un paramétrage spécifique des valeurs seuils du potentiel d'oxydoréduction, cependant que les cellules aval sont gérées conformément au procédé de régulation décrit dans FR-A-2 724 646, permettant de terminer le traitement par une élimination complète des éléments azotés et des composants carbonés subsistant après le traitement réalisé dans les cellules amonts. Pendant les phases d'aération, le potentiel d'oxydoréduction assure le degré d'oxydation des boues recherché. Ainsi, sur les mêmes bases de logique automate, les régulations des cellules d'aération sont distinctes.

Comme on le comprend, la programmation ne répose pas sur une évolution entre seuils, comme dans les automates traditionnels , mais sur l'analyse de l'évolution de la courbe EH = f(temps).

Comme dans le brevet français susmentionné la régulation est basée sur l'analyse des variations du potentiel d'oxydoréduction EH, ces variations étant représentatives des changements d'état des espèces présentes : changements pouvant intervenir en fonction de la charge de la station d'épuration, de la qualité de l'effluent à traiter entrant dans la station, de la température, etc...

Le système de traitement des données permet d'analyser l'évolution du potentiel d'oxydoréduction par calcul des dérivées (variation de la mesure dans un intervalle de temps), comme dans le brevet français déjà cité. Cette analyse permet de définir les évolutions suivantes :
- dérivée positive = accroissement des concentrations en formes oxydées ;
- dérivée négative = accroissement des concentrations en formes réduites ;
- dérivée nulle = phase de stabilisation.

Lorsque la dérivée tend vers l'infiniment petit, on réalise une étude de variation de seuil qui permet de savoir dans quel sens le potentiel d'oxydoréduction EH évolue. La gamme des potentiels d'oxydoréduction est découpée en une succession de zones définissant un critère de qualité. Comme on le voit sur la figure 4 des dessins annexés et comme déjà spécifié dans le brevet français susmentionné, sont identifiées :
- 3 zones d'activité ou de « critère qualité »
   - zone critère 1 : zone de nitrification
   - zone critère 2 : zone d'élimination du carbone et de dénitrification partielle
   - zone critère 3 : zone de dénitrification ;
- 2 zones de danger :
   - une zone d'alarme, dans laquelle le potention EH ne doit pas se maintenir car celle correspond, en phase d'aération, à des conditions de fonctionnement pour lesquelles la teneur en oxygène est insuffisante pour assurer l'élimination du carbone, et, en phase de non-aération, à une teneur résiduelle en oxygène trop élevée, incompatible avec la dénitrification.
   - une zone interdite, dans laquelle les risques d'anaérobiose sévère sont importants et risquent d'entrainer un dysfonctionnement majeur de la station.

Suite à son analyse (vitesse d'évolution et zone de « critère qualité ») l'automate établit un diagnostic de capacité du couple aération/biologie à assurer les réactions de dégradation des pollutions azotée et carbonée.

Après établissement du diagnostic, l'automate détermine les durées optimales de marche ou d'arrêt des systèmes d'aération en fonction du degré d'épuration recherché, les régulations des cellules d'aération étant distinctes sur les mêmes bases de logique automate :
- durée d'aération nécessaire pour rééquilibrer le système afin de rétablir un degré d'oxydation des boues satisfaisant ;
- durée d'aération nécessaire pour un apport d'oxygène qui permette d'engager au mieux les réactions de dégradation de la charge carbonée dans les cellules amont.
- durée d'aération nécessaire pour compléter l'apport d'oxygène afin d'optimiser les réactions de dégradation de la charge carbonée et la nitrification dans les cellules aval.
- durée nécessaire de l'arrêt d'aération pour compléter la dénitrification dans les cellules aval.

En dehors de la régulation proprement dite sur les cellules d'aération amont et aval, l'automate peut gérer des alarmes ou défauts lorsqu'une intervention humaine est nécessaire, ce qui permet de détecter des discordances dans les informations reçues et d'en rendre compte aux opérateurs, ce qui améliore ainsi la fiabilité du processus d'aération dans son ensemble.

Il existe trois causes principales susceptibles de déclencher les fonctions alarmes du système de régulation selon l'invention :
a) des troubles majeurs du procédé, tels que des défaillances des moyens d'aération, une surcharge permanente de la pollution ou même une détérioration de la biomasse. Dans ce cas, la mission unique du système de régulation est de signaler les incidents aux opérateurs ;
b) des problèmes de métrologie et, en particulier, de validation du signal de mesure du potentiel d'oxydo-réduction : des défauts de sondes de mesure de potentiel ou des insuffisances de maintenance entrainent alors un basculement de la gestion de l'aération sur un programmateur « temps », afin d'affranchir la régulation de ladite aération par rapport à la mesure de potentiel d'oxydo-réduction.
c) des alarmes secondaires peuvent être également activées lorsque des incidents mineurs apparaissent, par exemple, une surcharge temporaire de pollution ou des interactions hydrauliques entre les cellules d'aération. Tout en assurant la régulation de l'aération, le système selon l'invention avertit l'opérateur de ces incidents.

Les courbes d'évolution du potentiel d'oxydoréduction en fonction du temps dans le système de régulation automatique de l'aération des cellules amont et aval ont été représentées sur la figure 5 des dessins annexés. Elles sont du même type que celles que l'on observe dans le cas de la régulation sur bassin unique d'aération, selon le brevet français déjà cité, mais elles présentent cependant certaines caractéristiques bien distinctes, résultant des fonctions différentes affectées aux différentes cellules.

Sur les cellules d'aération aval (courbe de variation du potentiel EH en trait fin), le domaine des variations du signal du potentiel d'oxydo-réduction est similaire à celui observé sur une cellule d'aération conformément au procédé antérieur décrit dans le brevet français cité ci-dessus.

Sur les cellules d'aération amont, (courbe de variation du potentiel EH en trait gras), le domaine des variations du potentiel d'oxydo-réduction est volontairement restreint, afin de limiter le déroulement des réactions de nitrification : il en résulte un accroissement de la fréquence des séquences d'aération. A titre indicatif, la fréquence journalière des cycles d'aération est supérieure à 15 sur les cellules amont assurant en priorité l'élimination de la pollution carbonée, alors que cette fréquence est de l'ordre de 7 à 12 cycles d'aération journaliers pour les cellules aval, assurant le traitement de la pollution azotée.

Sur les cellules amont, l'enveloppe de la courbe de variation du potentiel d'oxydoréduction est représentative des apports diurnes de la charge polluante. Pendant la nuit, les amplitudes des variations sont réduites et les augmentations du potentiel d'oxydoréduction sont plus lentes. Cette réduction d'amplitude est moins marquée sur des signaux provenant des cellules d'aération aval. Il faut également souligner que les intervalles de temps entre les cycles d'aération sont plus importants lors des phases diurnes.

Comme dans le procédé de régulation objet du brevet français déjà cité, les effets d'une dilution ou d'une surcharge de pollution sont amortis par l'adaptation des cycles d'aération. En particulier, l'invention permet un amortissement des variations des charges polluantes sur les cellules d'aération amont. Une dilution de la charge polluante, résultant par exemple d'une pluie d'orage, entraîne une augmentation de la fréquence des cycles d'aération, à la fois sur les cellules d'aération amont et aval. Au contraire, une surcharge massive de pollution limite l'augmentation des valeurs du potentiel d'oxydoréduction et les cycles d'aération sont alors plus prolongés et de moindre fréquence ; dans ce dernier cas, la modification principale de l'aération s'effectue sur les cellules amont qui traitent alors une partie importante de la charge polluante, amortissent les perturbations et laissent aux cellules aval le soin de finir le traitement.

Cette figure 5 illustre les effets d'une modification de régime de la pollution sur la séquence d'aération. Dans l'exemple d'application auquel se réfère la figure 5, on a traité un effluent urbain typique auquel était ajouté une importante fraction d'effluent agro-industriel, pendant les jours de travail. Cette figure 5 représente les cycles d'aération sur 48 heures, avec des charges respectivement basse et haute (correspondant respectivement à un dimanche et à un lundi). L'évolution des cycles d'oxydoréduction sur les cellules amont est modifiée avec une forte réduction des pentes d'augmentation pendant la journée de travail. Une charge importante est ensuite visible, le lundi, de 10h à 21h, alors qu'elle était limitée de 13 h. à 18 h dans le cas du dimanche. On constate également que les longueurs des cycles ont été augmentées en liaison avec la charge en pollution carbonée. Sur les cellules d'aération aval, il est important de noter la modification de l'enveloppe des variations du potentiel d'oxydoréduction entre les deux jours. La variation d'amplitude est importante le dimanche, lorsque le faible apport de pollution est essentiellement traité sur les cellules d'aération amont. A l'opposé, lorsqu'on excède la capacité de traitement des cellules amont, les cellules aval sont soumises à des charges plus importantes qu'elles doivent traiter. Ceci donne aux cellules aval, un caractère complémentaire lorsque les volumes d'aération amont sont limités. Ainsi, l'aération est encore adaptée à la charge polluante. Les dépenses d'énergie nécessaires au procédé d'aération tendent pas conséquent à être adaptés à la charge polluante influente.

L'exemple de réalisation auquel se réfère la figure 5 est une unité de 40 000 éq.hab. (Equivalent habitant) , qui sera désignée ci-après site A, ayant une configuration de bassin d'aération en U comme illustré par la figure 2b, comportant deux cellules d'aération de 2600 m ³ chacune, l'oxygénation étant fournie par des turbines d'aération classiques. Le temps d'aération cumulé, par jour, était d'environ 5h30 sur la cellule amont et de 4h30 sur la cellule aval, pour une puissance d'aération respective de 120 kW et de 80 kW, et une charge moyenne quotidienne de 1050 kg de DBO. Même dans des configurations différentes, la répartition de l'aération entre cellules amont et aval se situe généralement dans la proportion 60% (amont)/ 40% aval. Ces résultats confirment que la majeure partie du traitement, en ce qui concerne la dégradation des composés carbonés, s'effectue sur la cellule amont.

On donnera maintenant, à titre d'exemples non limitatifs, des résultats obtenus par la mise en oeuvre du procédé selon l'invention, sur différentes installations de traitement d'eaux.

L'expérimentation dont il est rendu compte ci-après a été effectuée sur trois installations de traitement d'eau présentant toutes une configuration en série des bassins d'aération. Ces installations dénommées ci-après Sites A, B, C présentaient respectivement une capacité de 40 000, 15 000 et 14 000 eq.hab. Sur chaque site, on a effectué une comparaison entre le résultat du traitement avec régulation automatique selon l'invention et le résultat sans régulation. Le tableau 1 ci-après résume les résultats comparatifs ainsi obtenus.

**Tableau :**

| | Site A (sans régulation) | Site A (avec régulation) | Site B (sans régulation) | Site B (avec régulation) | Site C (sans régulation) | Site C (avec régulation |
|---|---|---|---|---|---|---|
| Respect des normes UE | Oui | Oui | Non | Oui | Oui | Oui |
| Rendement Elimination C (%) | 98,0 | 98,8 | 97 | 98 | 98,9 | 99,0 |
| Rendement Elimination N (%) | 95,1 | 95,1 | 50 | 80 | 88,8 | 93,8 |
| Economie Energie | | 15% | | 5% | | 20% |

Les résultats ainsi mentionnés font clairement ressortir que le système de régulation selon l'invention permet de respecter les normes de rejet édictées par l'Union Européenne.

En ce qui concerne le site B, on notera que sans la régulation selon l'invention, il se produit un rejet d'une forme non oxydée des composés azotés alors qu'en mettant en oeuvre l'invention, l'élimination de l'azote passe de 50 à 80%. Les composés azotés sont, dans ce cas, totalement oxydés.

En ce qui concerne les sites A et C, les rendements d'élimination du carbone et de l'azote ont été maintenus ou améliorés, ces rendements correspondant au maximum pouvant être atteint par la capacité de l'installation, avant même la mise en place du procédé selon l'invention.

On notera en outre que la mise en oeuvre du procédé de régulation selon la présente invention permet de réaliser d'importantes économies en énergie.

Il résulte de la lecture de la description qui précède que le procédé objet de la présente invention apporte des résultats particulièrement satisfaisants. Ainsi qu'on l'a précédemment expliqué, les cellules d'aération amont assurent un traitement de la majeure partie de la charge polluante, avec une priorité accordée à l'élimination du carbone et les cellules aval complètent le traitement en effectuant de surcroît l'élimination de l'azote. L'invention permet d'obtenir une excellente qualité des eaux traitées accompagnée d'une grande fiabilité notamment en ce qui concerne la gestion et l'optimisation du processus d'aération. Par ailleurs, l'invention permet d'obtenir une optimisation de la consommation d'énergie ce qui se traduit par d'importantes économies d'exploitation.

Il demeure bien entendu que la présente invention n'est pas limitée aux exemples de réalisation décrits et/ou représentés mais qu'elle en englobe toutes les variantes qui entrent dans le cadre de la portée des revendications annexées.

## Revendications

1. Procédé de régulation de l'aération d'une installation de traitement biologique d'eaux usées en vue de l'élimination des pollutions carbonées et azotées comportant plusieurs bassins ou cellules d'aération disposés en série **caractérisé en ce que** :
- on mesure le potentiel d'oxydo-réduction EH sur chacun des bassins,
- on transmet respectivement lesdites mesures à un système de traitement de données en vue de l'analyse de l'évolution du potentiel d'oxydoréduction et de l'établissement des capacités (diagnostic) du couple aération / biologie à assurer les réactions de dégradation des pollutions carbonée et azotée et,
- on détermine, à partir dudit diagnostic, la mise en marche, la poursuite ou l'arrêt de l'aération sur lesdits bassins, en fonction du degré d'épuration recherché de manière que :
- dans les premiers bassins, ou bassins amont, la priorité soit donnée au traitement de la pollution carbonée avec un paramétrage spécifique des valeurs-seuils du potentiel d'oxydo-réduction et,
- dans les derniers bassins, ou bassins aval, on affine le traitement de la pollution carbonée et azotée par une gestion de l'aération qui consiste à établir la courbe d'évolution du potentiel d'oxydo-réduction, mesuré sur ledit bassin aval, en fonction du temps et à calculer la dérivée et, lorsque cette dérivée tend vers zéro, on corrèle la dérivée et la valeur du potentiel d'oxydo-réduction pour déterminer la mise en marche, la poursuite ou l'arrêt de l'aération sur lesdits bassins aval.

2. Procédé selon la revendication 1 **caractérisé en ce que**, après établissement du diagnostic, on détermine les durées optimales de marche ou d'arrêt des systèmes d'aération des différents bassins en fonction du degré d'épuration recherché :
- durée d'aération nécessaire pour rééquilibrer le système afin de rétablir un degré d'oxydation des boues satisfaisant.
- durée d'aération nécessaire pour un apport d'oxygène permettant d'engager au mieux les réactions de dégradation de la charge carbonée dans la ou les cellules amont ;
- durée d'aération nécessaire pour compléter l'apport d'oxygène en vue d'optimiser les réactions de dégradation de la charge carbonée et la nitrification dans la ou les cellules aval ;
- durée nécessaire de l'arrêt d'aération pour compléter la dénitrification dans la ou les cellules aval.

3. Procédé selon l'une des revendications 1 ou 2 **caractérisé en ce que** l'on génère des signaux d'alarmes ou de défauts concernant notamment des déficiences des systèmes d'aération, une surcharge polluante permanente ou temporaire, une détérioration de la biomasse, des défauts de fonctionnement des sondes de mesure du potentiel d'oxydo-réduction, des interactions hydrauliques entre les différentes cellules d'aération.

## Patentansprüche

1. Verfahren zur Regelung der Belüftung einer biologischen Anlage zur Behandlung von Abwasser durch Entfernung der kohlenstoffhaltigen und stickstoffhaltigen Schadstoffe, die mehrere in Reihe geschaltete Belüftungsbecken bzw.-zellen umfasst, **dadurch gekennzeichnet, dass**
- in jedem Becken das Redoxpotential EH gemessen wird,
- die entsprechenden Messwerte zur Analyse der Veränderung des Redoxpotentials und zur Ermittlung der Kapazitäten (Diagnose) des Paars Belüftung/biologische Behandlung, um die Reaktionen zum Abbau der kohlenstoffhaltigen und stickstoffhaltigen Schadstoffe sicherzustellen, auf ein Datenverarbeitungssystem übertragen werden und
- aus dieser Diagnose das Einschalten, Fortführen oder Unterbrechen der Belüftung in den Becken in Abhängigkeit vom gewünschten Reinigungsgrad derart festgelegt wird, dass
- in den ersten bzw. hinteren Becken die Behandlung der kohlenstoffhaltigen Schadstoffe mit einer spezifischen Parametrierung der Grenzwerte des Redoxpotentials Priorität hat und
- in den letzten bzw. vorderen Becken die Behandlung der kohlenstoffhaltigen und stickstoffhaltigen Schadstoffe durch Führung der Belüftung verfeinert wird, die darin besteht, die Kurve der Veränderung des Redoxpotentials, das in dem vorderen Becken gemessen wird, in Abhängigkeit von der Zeit aufzustellen und den Differentialquotienten zu berechnen und, wenn der Differentialquotient gegen Null geht, diesen mit dem Wert des Redoxpotentials zu korrelieren, um das Einschalten, Fortführen oder Unterbrechen der Belüftung in den vorderen Becken festzulegen.

2. Verfahren nach Anspruch 1, **dadurch gekennzeichnet, dass** nach Stellung der Diagnose die optimalen Zeiträume für den Betrieb oder die Unterbrechung der Belüftungssysteme der verschiedenen Becken in Abhängigkeit vom gewünschten Reinigungsgrad festgelegt werden:
- Belüftungsdauer, die zur Wiedereinstellung des Gleichgewichts des Systems erforderlich ist, um erneut einen zufriedenstellenden Oxidationsgrad des Belebtschlammes herzustellen,
- Belüftungsdauer, die für einen Sauerstoffeintrag erforderlich ist, der es ermöglicht, die Reaktionen zum Abbau der kohlenstoffhaltigen Belastung in der/den hinteren Zelle/n am besten stattfinden zu lassen,
- Belüftungsdauer, die zur Vervollständigung des Sauerstoffeintrags für die Optimierung der Reaktionen zum Abbau der kohlenstoffhaltigen Belastung und zur Nitrifikation in der/den vorderen Zelle/n erforderlich ist, und
- Dauer, die zur Unterbrechung der Belüftung erforderlich ist, um die Denitrifikation in der/den vorderen Zelle/n zu vervollständigen.

3. Verfahren nach Anspruch 1 oder 2, **dadurch gekennzeichnet, dass** Alarm- bzw. Störungssignale erzeugt werden, die insbesondere Defizite der Belüftungssysteme, eine ständige oder zeitweilige Schadstoffüberlastung, eine Verschlechterung der Biomasse, Funktionsstörungen der Messsonden für das Redoxpotential und hydraulische Wechselwirkungen zwischen den verschiedenen Belüftungszellen betreffen.

## Claims

1. Process for regulating the aeration of a waste water biological treatment installation with a view to the elimination of carbonaceous and nitrogenous pollution incorporating several aeration cells or tanks arranged in series, **characterized in that**:
- the redox potential EH on each of the tanks is measured,
- said measurements are respectively transmitted to a data processing system with a view to the analysis of the evolution of the redox potential and the establishment of capacities (diagnosis) of the aeration/biology pair in order to ensure degradation reactions of the carbonaceous and nitrogenous pollution and
- on the basis of said diagnosis, determination takes place of the starting, continuation or stopping of aeration on said tanks, as a function of the sought degree of purification in such a way that:
- in the first or upstream tanks priority is given to the treatment of carbonaceous pollution with a specific parametrization of threshold values of the redox potential and
- in the last or downstream tanks, the treatment of the carbonaceous and nitrogenous pollution is refined by a management of the aeration consisting of establishing the evolution curve of the redox potential, measured on the downstream tank, as a function of time and calculating the variation and, when said variation tends towards zero, correlation takes place of the variation and the value of the redox potential for determining the starting, continuation or stopping of aeration on said downstream tanks.

2. Process according to claim 1, **characterized in that**, after establishing the diagnosis, a determination takes place of the optimum operating or stoppage times of the aeration systems of the different tanks as a function of the sought degree of purification:
- aeration time necessary for rebalancing the system in order to reestablish a satisfactory degree of oxidation of the sludge,
- aeration time necessary for an oxygen supply permitting the optimum starting of the degradation reactions of the carbonaceous charge in the upstream tank or tanks,
- aeration time necessary for completing the oxygen supply for optimizing the degradation reactions of the carbonaceous charge and nitrification in the downstream tank or tanks,
- necessary aeration stoppage time for completing denitrification in the downstream tank or tanks.

3. Process according to one of the claims 1 or 2, **characterized in that** alarm or fault signals are generated more particularly relating to deficiencies of the aeration systems, a permanent or temporary polluting overload, a deterioration of the biomass, operational faults of the measuring probes for the redox potential and hydraulic interactions between the different aeration tanks.
